# EUROPEAN PATENT SPECIFICATION

(11) **EP 0 997 066 B1**
(45) Date of publication and mention of the grant of the patent: **11.06.2003**
(21) Application number: 99121347.1
(22) Date of filing: 26.10.1999
(51) Int. Cl.: A01D 75/08

(54) **A blade-whetting apparatus for bladed wheels**
Apparat zum Schärfen von Schneidemesser
Appareil d'aiguisage de lames de faucheuse

(30) Priority: 27.10.1998 JP 32286998
(43) Date of publication of application: 03.05.2000
(73) Proprietor: ITOH ELECTRIC CO., LTD., Kasai-shi, Hyogo-ken (JP)
(72) Inventor: Itoh, Kazuo, Kasai-shi, Hyogo-ken (JP); Kobayashi, Kazuaki, Kasai-shi, Hyogo-ken (JP)
(74) Representative: Glawe, Delfs, Moll & Partner

(56) References cited:
- DE-A- 1 582 505
- DE-A- 3 400 424
- US-A- 3 315 452
- US-A- 3 660 971
- US-A- 3 768 163

## Description

### TECHNICAL FIELD

The present invention relates to a blade-whetting apparatus for bladed wheels used in a mowing machine that mows the grass or lawn by sliding two bladed wheels against each other and using the shearing action of their peripherally formed blades.

### PRIOR ART

Bladed wheels of a mowing machine comprising two bladed wheels used to be removed from the machine and whetted or sharpened individually.

US 3768163A discloses a sharpening device for a portable powered grass or hedge trimmer. The sharpening device comprises a body or a sheath with abrasive stones adapted to sharpen the teeth of a blade when the motor of the trimmer is energized.

### PROBLEM TO BE SOLVED BY THE INVENTION

The conventional method of removing two bladed wheels from the mowing machine and whetting them individually is time-consuming and inefficient. The object of the present invention, therefore, is to provide a blade-whetting apparatus with which blade-whetting can be easily performed by simply rotating the bladed wheels.

### MEANS TO SOLVE THE PROBLEM

In a mowing machine that mows the grass or lawn by sliding two bladed wheels, i.e., a lower bladed wheel and an upper bladed wheel, against each other and using the shearing action of their peripherally formed blades, a whetstone-supporting plate is detachably established on a fixed part, e.g, the main body of the mowing machine, and a sheet-shaped whetstone is detachably mounted on said whetstone-supporting plate. The whetstone mounted on the whetstone-supporting plate extends at least towards the periphery of the bladed wheels, and is inserted between the two bladed wheels. When the two bladed wheels, i.e, the lower bladed wheel and the upper bladed wheel, are rotated in this condition, the opposing surfaces of the opposing bladed wheels slidably contact the upper and bottom surfaces of the whetstone and are whetted automatically.

The whetstone inserted between the two bladed wheels may not only be mounted on the whetstone-supporting plate, but also be detachably mounted on a fixed part of the mowing machine.

### EFFECTS OF THE INVENTION

Using the blade-whetting apparatus for bladed wheels of the present invention in a mowing machine that cuts the object using two bladed wheels, i.e., the lower and upper bladed wheels, in a scissors-like manner, it is possible to attach the blade-whetting apparatus to the mowing machine in its operational condition without dismantling the upper and lower bladed wheels and perform blade whetting by simply rotating the upper and lower bladed wheels. Therefore it is easy to maintain a good cutting condition.

### EMBODIMENTS OF THE INVENTION

Embodiments of the blade-whetting apparatus of the present invention will now be described by reference to the accompanying drawings.

FIG. 1 is a perspective view of a mowing machine attached with a blade-whetting apparatus.

FIG. 2 is a perspective view of the mowing machine of FIG. 1 with the blade-whetting apparatus shown separately.

FIG. 3 is a side view of the mowing machine attached with the blade-whetting apparatus in which a portion is shown in section.

FIG. 4 is a perspective view of a mowing machine with a 'modified blade-whetting apparatus shown separately.

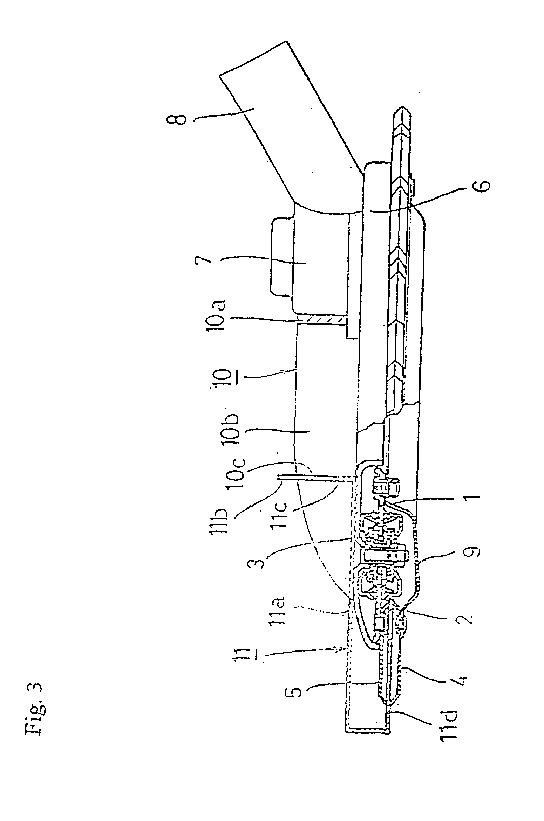

The mowing machine having the blade-whetting apparatus of the present invention comprises, as shown in FIG. 3, an annular small-diameter external gear 1 and an annular large-diameter internal gear 2, which are concentric and arranged on the same plane, and a plurality of intermediate gears 3 meshing with said external and 'internal gears. One of the intermediate gears is a driving gear, which rotates the external gear 1 and the internal gear 2 in opposite directions. The lower bladed wheel 4 is mounted on the external gear 1 and the upper bladed wheel 5 is mounted on the internal gear 2. The lower and upper bladed wheels rotate in opposite directions to perform mowing by their shearing action. The external gear 1, the internal gear 2 and the intermediate gears 3 are held by the main body 6, which is a fixed member. On the upper surface of the main body 6 is a protruding gear box 7, which transfers the torque generated by an engine or a motor established at the base portion of the main-body-supporting stick 8 and transmitted via the drive shaft running through the main-body-supporting stick 8 to the driving gear.

Lower bladed wheel 4 and upper bladed wheel 5 are both made of annular sheet tool materials, the peripheries of which are formed into cup-shaped teeth. The cup-shaped teeth of the lower bladed wheel and those of the upper bladed wheel slidably contact each other, thereby functioning as cutting blades or edges. As shown in FIG. 3, upper bladed wheel 5 is directly bolted onto the internal gear 2, whereas lower bladed wheel 4 is bolted onto the outer circumference of a thin and annular connecting plate 9, and the inner circumference of said connecting plate 9 is bolted onto the external gear 1. The lower bladed wheel 4 and the upper bladed wheel 5 resiliently contact each other thanks to the resiliency of the bladed wheels themselves and/or the resiliency of the connecting plate 9, so the upper and lower bladed wheels can be forced open.

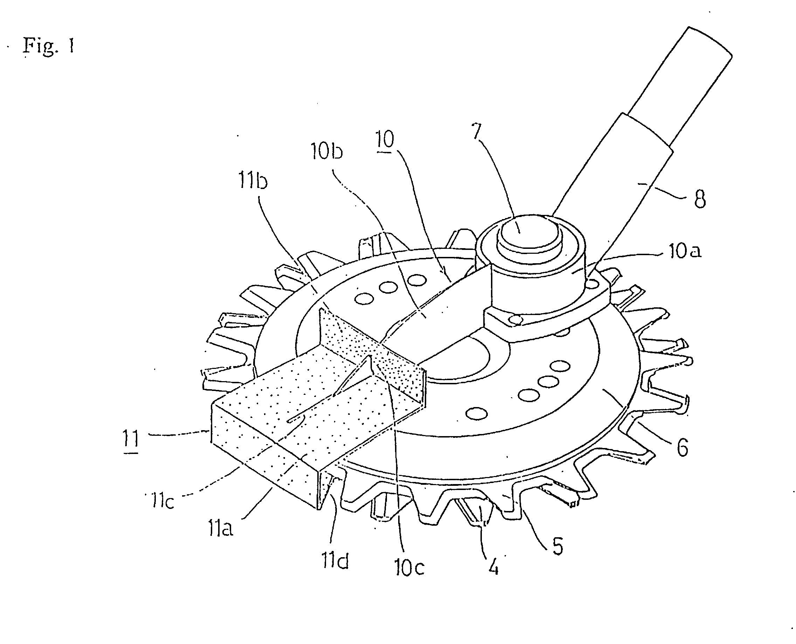

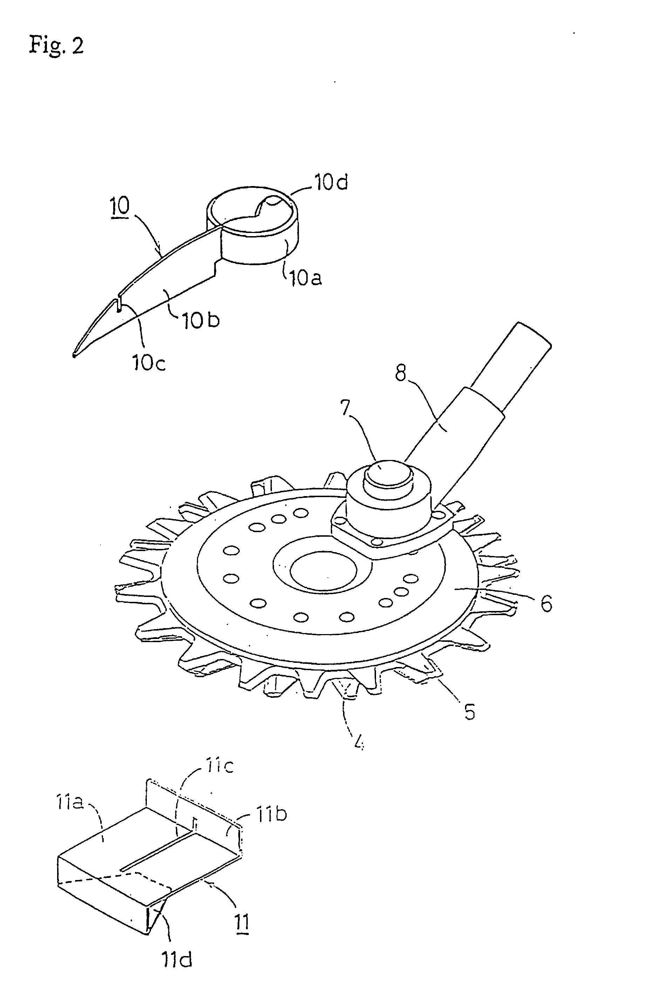

FIG. 1 is a perspective view of the mowing machine equipped with the blade-whetting apparatus, and FIG. 2 is a perspective view showing the mowing machine and the blade-whetting machine separately. In the illustrated example, the gear box 7 protruding from the upper surface of the main body 6 is used to mount the whetstone-supporting plate 10 in a detachable manner. Specifically, the whetstone-supporting plate 10 comprises a tubular base 10a and a supporting plate 10b fixed on said tubular base 10a. The tubular base 10a is provided with a cut 10d for housing the main-body-supporting stick 8 so that the whetstone-supporting plate 10 mounted on the gear box 7 does not move. The supporting plate 10b, which stands upright and extends forward, is fixed on the tubular base 10a. At a forward position of the supporting plate 10b, there is a slit 10c having a certain depth from the upper edge. The sheet-shaped whetstone 11 is fitted into this slit 10c.

The sheet-shaped whetstone 11 comprises a flat part 11a, an upright wall 11b, a slot 11c and a folded part 11d. The base portion of the flat part 11a is folded upward to form the upright wall 11b. The slot 11c extends from a point on the flat part 11a to the upright wall 11b. The supporting plate 10b protrudes upward from the flat part 11a through the slot 11c in such a way that the upright wall 11b is fitted into the slit 10c of the supporting plate 10b. In this way, the sheet-shaped whetstone 11 is 'detachable while at the same time stably positioned. The forward portion of the sheet-shaped whetstone 11 is folded inward so that the folded part 11d can be inserted between the lower bladed wheel 4 and the upper bladed wheel 5.

A known resinoid whetstone made of a thin and tough stone-powdered metal sheet may be used for the sheet-shaped whetstone 11 used in the present invention. Preferably the thickness of the metal sheet itself is less than 1 mm, and the thickness of the metal sheet plus the stone powder is approximately 1 mm. A whetstone entirely made of a mixture of stone powder and a binder may also be used as long as such whetstone is strong enough to be inserted between the lower bladed wheel 4 and the upper bladed wheel 5.

The whetstone shown in FIGS. 1 and 2 needs not be entirely made of a whetstone material. For example, a thin and tough metal sheet may be employed to shape the overall form, and only the folded part 11d may be provided with stone powder.

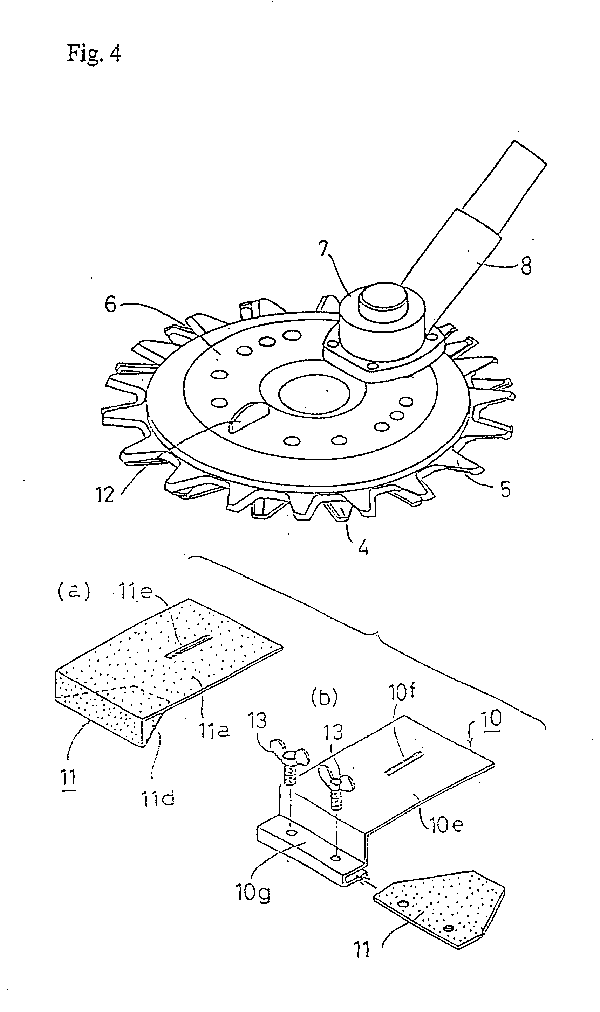

FIG. 4 is an exploded perspective view showing another embodiment of the present invention. In this embodiment, a stopper 12 is established on the upper surface of the mowing machine, and a whetstone 11 shown in (a) or a whetstone-supporting plate 10 shown in (b) is mounted on this stopper 12. Specifically, the whetstone 11 shown in (a) comprises a folded part 11d and a flat part 11a provided with .a stopper slot 11e, through which the stopper 12 sticks out. The whetstone-supporting plate 10 shown in (b) comprises a flat part 10e provided with a stopper slot 10f, through which the stopper 12 sticks out, and the tip of this flat part 10e is folded downward, forward, downward and backward to form a whetstone-fastening part 10g, which detachably holds the whetstone 11. The whetstone 11 is fastened to the whetstone-fastening part 10g by means of fastening bolts 13.

The combination of the whetstone-supporting plate and the whetstone as shown in FIG. 4 (b) may also be used in the embodiment shown in FIG. 1 to FIG. 3. That is, another whetstone-supporting plate incorporating a whetstone is used. In other words, in the whetstone detachably mounted on the whetstone-supporting plate in FIG. 2, only the portion that needs to function as a whetstone is replaceable. A whetstone detachably held by a whetstone-supporting plate such as that shown in FIG. 4 (b) may be a consumable and relatively cheap.

When the blade-whetting apparatus as described above is attached to the mowing machine, and the lower bladed wheel 4 and the upper bladed wheel 5 are rotated in the same manner as they are in mowing, the cutting edges of the upper bladed wheel 5 contact the upper surface of the whetstone 11, and the cutting edges of the lower bladed wheel 4 contact the lower surface of the whetstone 11. The cutting edges of the lower bladed wheel 4 and the cutting edges of the upper bladed wheel 5 are whetted simultaneously to maintain a good cutting condition At this time, because the direction of the upper bladed wheel 5 slidably contacting the upper surface of the whetstone and the direction of the lower bladed wheel 4 slidably contacting the lower surface of the whetstone are opposite, no significant rotational force is applied to the whetstone in the circumferential direction. Therefore not much strength is required of the whetstone and the whetstone-supporting plate.

The lower bladed wheel 4 and the upper bladed wheel 5 need not be rotated continuously. Instead, the blades are preferably whetted quickly and frequently.

When the blade whetting is completed, the blade-whetting apparatus is dismounted. At this time, as the whetstone sandwiched between the lower bladed wheel 4 and the upper bladed wheel 5 is removed, the cutting edges of the lower bladed wheel 4 and the upper bladed wheel 5 contact each other thanks to the resiliency of the upper and lower bladed wheels themselves and/or the resiliency of the connecting plate 9, making the machine ready to mow by shearing.

Although the lower bladed wheel 4 and the upper bladed wheel 5 of the mowing machine described in the above embodiments rotate in opposite directions, there are mowing machines (including lawn mowers) in which both the lower bladed wheel 4 and the upper bladed wheel 5 move, or at least one of them moves, reciprocally. The present invention can also be applied in such mowing machines. In the case of mowing machines with reciprocally moving bladed wheels, a whetstone having a width larger than that of the bladed wheel is used between the lower bladed wheel 4 and the upper bladed wheel 5.

### CODES

1: External gear; 2: Internal gear; 3: Intermediate gear; 4: Lower bladed wheel; 5: Upper bladed wheel; 6: Main body; 7: Gear box; 8: Main-body-supporting stick; 9: Connecting plate; 10: Whetstone-supporting plate; 10a: Base; 10b: Supporting plate; 10c: Slit; 10d: Cut; 10e: Flat part; 10f: Stopper slot; 10g: Whetstone-fastening part; 11: Whetstone; 11a: Flat part; 11b: Upright wall; 11c: Slot; 11d: Folded part; 11e: Stopper slot; 12: Stopper; 13: Fastening bolt

## Claims

1. A mowing machine comprising two bladed wheels (4, 5) sliding against each other and using the shearing action of their peripherally formed blades for mowing grass or lawn, and a blade-whetting apparatus for the bladed wheels comprising a whetstone-supporting plate (10) and a sheet-shaped whetstone (11), in which the whetstone-supporting plate is detachably attachable to a fixed part on the upper surface of the mowing machine and the sheet-shaped whetstone (11), which is inserted between the two bladed wheels (4, 5) from the periphery of the bladed wheels, is supported by said whetstone-supporting plate (10).

2. A mowing machine comprising two bladed wheels (4, 5) sliding against each other and using the shearing action of their peripherally formed blades for mowing grass or lawn, and a blade-whetting apparatus for the bladed wheels comprising a sheet-shaped whetstone (11) that extends towards the periphery of the bladed wheels (4, 5), in which the sheet-shaped whetstone (11) is detachably attachable to a fixed portion of the upper surface of the mowing machine and the tip of said sheet-shaped whetstone (11) is folded back inward and inserted between the two bladed wheels (4, 5).

## Patentansprüche

1. Maschine zum Mähen mit zwei Schneidekränzen (4, 5), die sich gegeneinander verschieben und die die Scherwirkung'der an ihrem Rand gebildeten Klingen zum Mähen von Rasen oder Gras nutzen, und einem Apparat zum Schärfen der Schneidekränze mit einer Platte (10) zum Tragen eines Schleifsteines und einem blattförmigen Schleifstein (11), wobei die Platte zum Tragen eines Schleifsteins abnehmbar auf einem festen Teil der oberen Oberfläche der Maschine zum Mähen anbringbar ist und wobei der blattförmige Schleifstein (11), der zwischen die zwei Schneidekränze (4, 5) von dem Rand der Schneidekränze eingefügt ist, von der Platte (10) zum Tragen des Schleifsteines unterstützt wird.

2. Maschine zum Mähen mit zwei Schneidekränzen (4, 5), die sich gegeneinander verschieben und die die Scherwirkung der an ihrem Rand gebildeten Klingen zum Mähen von Rasen oder Gras benutzen, und einem Apparat zum Schärfen der Schneidekränze mit einem blattförmigen Schleifstein (11), der sich zu dem Rand der Schneidekränze (4, 5) erstreckt, wobei der blattförmige Schleifstein (11) abnehmbar auf einen festen Bereich der oberen Oberfläche der Maschine zum Mähen anbringbar ist und wobei die Spitze des blattförmigen Schleifsteins (11) nach innen zurückgebogen und zwischen die zwei Schneidekränze (4, 5) eingefügt ist.

## Revendications

1. Tondeuse à gazon comprenant deux disques porte-lames (4, 5), glissant l'un contre l'autre et exploitant l'action de cisaillement de leurs lames disposées en périphérie pour tondre l'herbe ou le gazon, et un appareil d'aiguisage des lames destiné aux disques porte-lames comprenant un support de pierre à aiguiser (10) et une pierre à aiguiser (11) en forme de feuille, dans laquelle le support de pierre à aiguiser est fixé de manière amovible sur une partie fixe de la surface supérieure de la tondeuse à gazon et la pierre à aiguiser (11) en forme de feuille, qui est insérée entre les deux disques porte-lames (4, 5) à partir de la périphérie des deux disques porte-lames, est supportée par ledit support de pierre à aiguiser (10).

2. Tondeuse à gazon comprenant deux disques porte-lames (4, 5), glissant l'un contre l'autre et exploitant l'action de cisaillement de leurs lames disposées en périphérie pour tondre l'herbe ou le gazon, et un appareil d'aiguisage des lames destiné aux disques porte-lames comprenant une pierre à aiguiser (11) en forme de feuille qui s'étend en direction de la périphérie des disques porte-lames (4, 5), dans laquelle la pierre à aiguiser (11) en forme de feuille est fixée de manière amovible sur une partie fixe de la surface supérieure de la tondeuse à gazon et l'extrémité de ladite pierre à aiguiser (11) en forme de feuille est repliée vers l'intérieur et insérée entre les deux disques porte-lames (4, 5).
